# FASCICULE DE BREVET EUROPEEN

(11) **EP 1 627 801 B1**
(45) Date de publication et mention de la délivrance du brevet: **17.10.2007**
(21) Numéro de dépôt: 05360028.4
(22) Date de dépôt: 11.08.2005
(51) Int. Cl.: B62D 33/06, B62D 29/00

(54) **Structure de cabine à toit monobloc pour véhicule de voirie**
Einstückiges Dach für ein Fahrerhaus eines Strassenfegefahrzeugs
Cabin structure with a one-piece roof for a street-cleaning vehicle.

(30) Priorité: 19.08.2004 FR 0408978
(43) Date de publication de la demande: 22.02.2006
(73) Titulaire: CFM Nilfisk-Advance S.p.A., 20121 Milano (IT)
(72) Inventeur: Jungo, Nicolas, 6370 Stans (CH)
(74) Mandataire: Burkard, Thierry

(56) Documents cités:
- EP-A- 0 955 229
- EP-A- 1 147 971
- EP-A- 1 211 167
- EP-A- 1 380 496
- FR-A- 2 840 871

## Description

La présente invention concerne une structure de cabine, plus particulièrement pour un véhicule de voirie, conçue pour permettre une distribution de l'air ventilé dans toute la cabine tout en assurant une visibilité optimale.

Les véhicules utilitaires affectés à des travaux de voirie tels que le nettoyage des chaussées, le déneigement ou l'entretien des voies ou espaces ouverts au public se caractérisent en général par une largeur bien moindre par rapport aux véhicules de type classique utilisés pour le transport de personnes ou de marchandises.

Ces véhicules sont le plus souvent conduits à emprunter des voies qui ne sont pas forcément adaptées à leur passage, à raison de l'étroitesse des lieux ou de la faible hauteur, comme par exemple dans le cas de parkings souterrains, ou encore à raison de la présence de véhicules de part et d'autres des bords de la voirie, ou encore d'obstacles tels que des tunnels, des ponts ou autres objets surplombant la voirie.

De plus, les fonctions qui leur sont imparties leur imposent des déplacements à faible vitesse.

Ces véhicules doivent donc présenter une structure légère et un faible encombrement. Les véhicules couramment utilisés pour des tâches de voirie présentent une largeur hors tout comprise entre 1 m et 1 m 30.

Le véhicule-type comporte en règle générale une cabine avant adossée à un bac de travail pouvant consister en une cuve d'alimentation en eau, pour les véhicules affectés à des tâches de lavage, ou un réceptacle pour recueillir des déchets, s'agissant des véhicules affectés à des tâches de nettoyage ou de collecte. L'ensemble est positionné sur un châssis qui peut être articulé.

Dans la mesure où ces véhicules comportent souvent dans leurs parties avant et inférieure des éléments fonctionnels, comme par exemple des brosses ou des rampes de lavage dépassant sur les cotés, il est impératif que l'opérateur qui est le plus souvent est en même temps le conducteur du véhicule dispose d'une visibilité la plus large possible.

En effet, il est essentiel d'éviter tout choc ou même contact avec des personnes ou d'autres véhicules qui seraient présents sur le trottoir ou au bord de la voirie, lors du passage du véhicule.

Par ailleurs, dans la mesure où les accessoires tels que des brosses ou des rampes ou d'autres outils sont positionnés en général sur l'avant du véhicule ou sur les côtés, au niveau du châssis, il est nécessaire de prévoir un pare-brise descendant le plus bas possible voire jusqu'au sol pour garantir au conducteur une visibilité optimale.

La dimension de la structure, plus particulièrement en hauteur ou en largeur, constitue donc l'un des problèmes majeurs en matière de véhicules de voirie.

Il n'est pas possible, pour d'évidentes raisons d'économie et de rationalité de la gestion des parcs de véhicules de voirie, de prévoir différents types de différentes dimensions ou hauteurs.

La nécessité d'assurer une visibilité optimale comporte un autre inconvénient. En effet, en raison de la présence de surfaces vitrées de grandes dimensions, ces véhicules doivent impérativement être équipés d'un système de climatisation et de dégivrage rapide et performant, pour permettre tout simplement de maintenir en toutes circonstances une parfaite visibilité. Ceci conduit à utiliser sur ces véhicules des unités de climatisation et de chauffage particulièrement volumineuses.

Il en résulte des inconvénients importants en terme de volume nécessaire pour la mise de place de ces unités de chauffage et de climatisation, alors même que la répartition de l'air froid ou réchauffé selon le cas n'est pas optimal, ce qui nécessite donc un fonctionnement permanent intensif de ces unités.

Les documents de l'art antérieur qui ont été identifiés n'apportent pas de solution satisfaisante à ces problèmes.

Le document EP 1 380 496 décrit une cabine de véhicule réalisée d'une seule pièce dans un matériau léger

Le document EP 1 147 971 un toit moulé d'une seule pièce pour un véhicule, comportant des entrées et des sorties d'air, et permettant de positionner une installation de conditionnement d'air dans la partie supérieure du véhicule.

Le document FR 2 840 871 A décrit une structure de cabine pour un véhicule de voirie selon le préambule de la revendication 1.

La présente invention se propose de remédier aux inconvénients mentionnés ci-dessus en réalisant une structure de cabine pour véhicule de voirie, dans laquelle l'unité de climatisation et de chauffage est placée à l'arrière de la cabine, à l'extérieur de l'habitacle, l'air étant insufflé par l'arrière à l'intérieur d'un toit creux monobloc conçu pour permettre une distribution de l'air ventilé dans toute la cabine.

La présente invention sera mieux comprise en référence à la description donnée ci-après d'un mode de réalisation, et en référence aux figures annexées, dans lesquelles :
- la figure 1 est une vue de trois quart en élévation d'un véhicule de voirie comportant la structure de cabine selon l'invention,
- la figure 2 est une vue en coupe latérale illustrant la structure du toit de la cabine selon l'invention,
- la figure 3 est une vue en éclaté montrant l'assemblage de la structure de la cabine,
- la figure 4 est une vue de côté de la cabine selon l'invention, équipée de différents accessoires, et
- la figure 5 est une vue de détail en coupe des profilés utilisés pour l'assemblage de la structure de cabine selon l'invention.

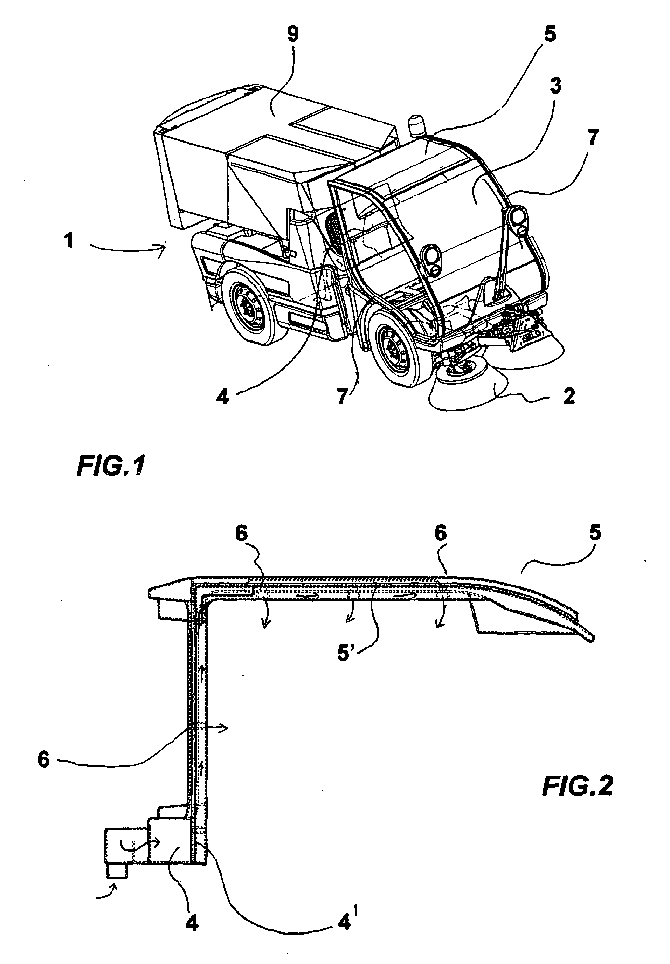

En se référant aux figures annexées, et plus particulièrement à la figure 1, la présente invention concerne une structure de cabine pour un véhicule de voirie, composée de manière classique d'un châssis sur lequel sont disposés les différents éléments constitutifs du véhicule, notamment une cabine (1) à l'avant de laquelle sont disposés des moyens (2) destinés à assurer le nettoyage de la voirie.

Dans l'exemple représenté, il s'agit d'un ensemble de deux de brosses disposées en partie avant sous le châssis du véhicule. Rien n'interdit cependant d'utiliser un nombre de brosses plus important.

La cabine (1) comporte un pare-brise (3) couvrant toute la partie avant du véhicule dans le prolongement d'un toit (5), et s'étendant jusqu'à l'avant du véhicule, au niveau de l'ensemble de brosses (2).

Un bloc d'alimentation en air soufflé (4) est disposé à l'arrière de la cabine (1), entre la paroi arrière de l'habitacle et la cuve (9) de collecte des déchets du véhicule, et relié à une unité de climatisation et de chauffage (non représentée) de type classique, qui est en général placée immédiatement en dessous.

Le toit (5) comporte une partie (5') horizontale supérieure couvrante et une partie verticale arrière (5") adossée à la cuve (9).

Selon le mode principal de mise en oeuvre de la présente invention, le toit (5) est réalisé d'une seule pièce, par exemple par rotomoulage, et présente une structure creuse.

La structure du toit (5) est représentée plus en détail à la figure 2.

Selon un mode préférentiel de réalisation, la partie verticale arrière (5") du toit (5) monobloc comportera une ouverture centrale (11) prévue pour recevoir une fenêtre (11').

La partie supérieure (5') du toit monobloc (5) forme la couverture de la cabine et s'étend jusqu'à la partie supérieure du pare-brise (3).

La partie arrière (5") du toit (5) forme le dossier de la cabine (3) et est adossée contre le bloc d'alimentation en air soufflé (4) de l'unité de climatisation et de chauffage.

Ainsi, l'air chaud ou froid généré par le bloc d'alimentation en air soufflé (4) est directement insufflé par l'arrière à l'intérieur du toit monobloc creux (5).

Pour assurer la distribution de l'air réchauffé ou refroidi à l'intérieur de l'habitacle, on prévoit une série de bouches d'aération (6) ménagées à intervalle régulier dans la partie (5') horizontale supérieure couvrante et la partie verticale arrière (5") du toit (5).

De la sorte, on supprime tout élément intermédiaire d'alimentation en air chaud ou refroidi et l'air est insufflé directement dans la cabine (1) grâce aux bouches d'aération (6), avec une répartition uniforme tant à l'arrière que sur le dessus et jusqu'au pare-brise (3).

Ainsi, on favorise par ailleurs la diffusion de l'air refroidi ou réchauffé à l'intérieur de la cabine par rayonnement, puisque le toit reste froid en été ou fait office d'isolant en hiver.

On peut prévoir d'assurer une alimentation complémentaire en air chaud ou froid par le dessous de manière classique, au moyen de conduits branchés en arrière du bloc d'alimentation en air soufflé (4) et passant sous le châssis de la cabine pour rejoindre l'avant, au niveau sensiblement des pieds de l'utilisateur.

La structure externe de la cabine (1) est réalisée au moyen de profilés latéraux (7) qui en constituent l'ossature extérieure en enserrant le toit monobloc creux (5) et le pare-brise (3).

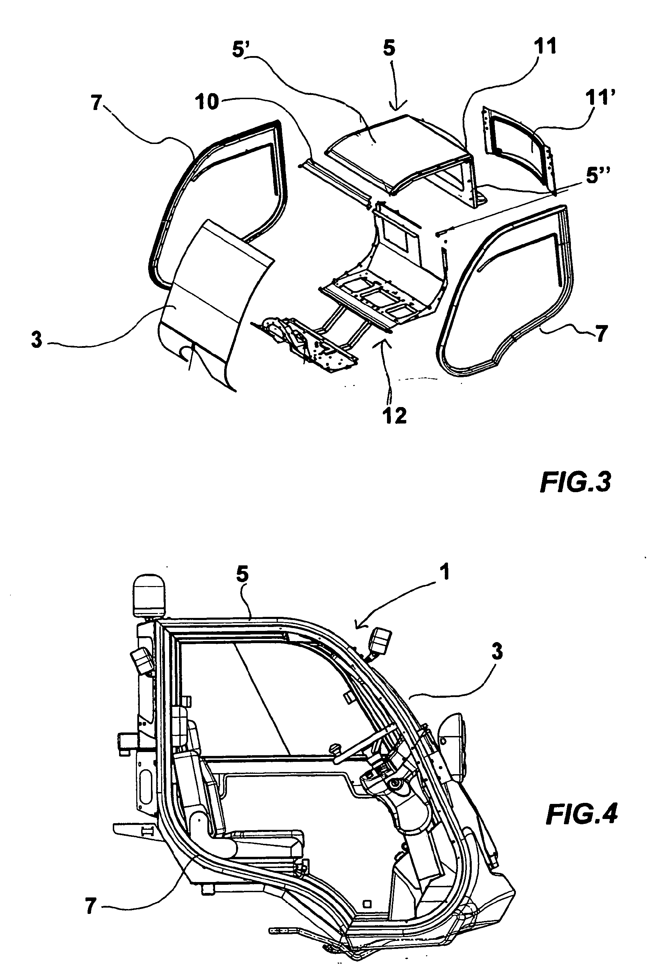

La figure 3 illustre le mode d'assemblage de la structure de la cabine.

L'extrémité avant de la partie (5') horizontale supérieure couvrante du toit (5) monobloc est fixée à la partie supérieure du pare-brise (3) par l'intermédiaire d'un profilé (10) de dimension appropriée.

Le toit monobloc (5) et la pare-brise (3) sont montés sur une structure de base (12) comportant un siège pour le conducteur ainsi que les éléments de transmission et de commande.

L'ensemble ainsi formé est disposé entre deux profilés latéraux (7) qui en assureront le maintien pour former la cabine qui sera ensuite montée sur le châssis du véhicule.

Selon une forme avantageuse de réalisation, les profilés (7) sont assemblés par vissage, par exemple au moyen d'inserts en forme de T (non représentés).

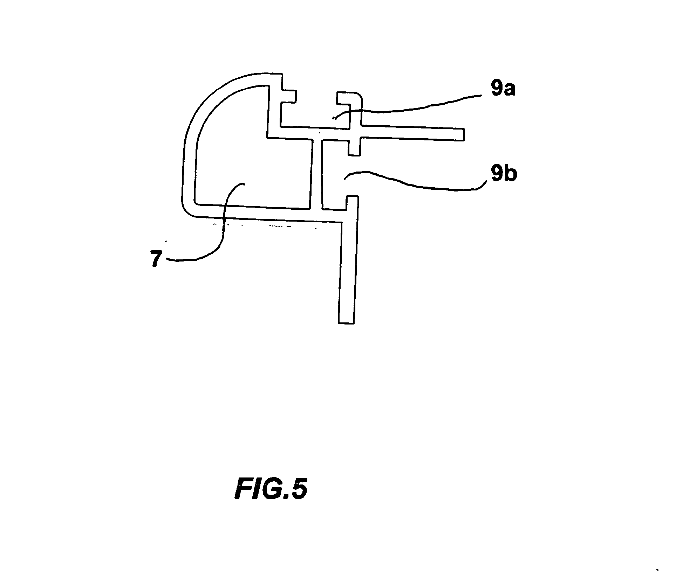

Comme montré à la figure 5, les profilés (7) présentent une structure creuse, afin d'assurer à la cabine un poids et un encombrement minima. La paroi extérieure des profilés (7) comporte des bords arrondis, pour éviter la présence d'angles vifs qui seraient susceptibles, par exemple, de blesser des personnes.

La paroi avant et la paroi intérieure des profilés (7) comportent des gorges ouvertes (9a, 9b) formant des rails, à l'intérieur desquels seront introduits des inserts de liaison.

Selon une variante de réalisation, les profilés (7) comportent chacun au moins une ouverture longitudinale ménagée sur la paroi avant extérieure, pour former des rails permettant l'insertion d'accessoires, comme par exemple des phares, un porte-charge, un gyrophare, des feux de travail ou un bloc d'éclairage.

Selon une autre variante de réalisation, les profilés (7) comportent chacun au moins une ouverture longitudinale ménagée sur la paroi avant intérieure, pour former des rails permettant l'insertion d'accessoires, comme par exemple des poignées, des porte-outils.

Ces modalités permettent la fixation solide et le réglage en hauteur d'éventuelles options sur la structure, à l'extérieur ou à l'intérieur de la cabine, sans qu'il soit nécessaire de recourir à des supports intermédiaires supplémentaires.

Un véhicule équipé d'une cabine selon l'invention sera particulièrement adapté pour le traitement de voirie d'accès difficile, en raison par exemple de l'étroitesse des voies ou de la faible hauteur disponible, comme dans le cas de parcs de stationnement souterrains ou de voies surplombées par des ouvrages ou du mobilier urbain.

## Revendications

1. Structure de cabine pour un véhicule de voirie, du type composé d'un châssis recevant une cuve de collecte (9), des moyens de nettoyage de la voirie (2), une cabine (1) comportant un pare-brise (3) couvrant toute la partie avant du véhicule dans le prolongement d'un toit (5) comportant une partie (5') horizontale supérieure couvrante et une partie verticale arrière (5") adossée à la cuve (9) et réalisée d'une seule pièce **caractérisé en ce qu**'un bloc d'alimentation en air soufflé (4) est disposé à l'arrière de la cabine (1) entre la paroi arrière de l'habitacle et la cuve (9), et en ce que la partie verticale arrière (5") du toit (5) présente une structure creuse, le bloc d'alimentation en air soufflé (4) étant relié à ladite partie verticale arrière (5") par une ouverture (4') pour permettre une distribution de l'air ventilé dans la cabine.

2. Structure de cabine suivant la revendication 1, **caractérisée en ce que** la partie verticale arrière (5") du toit (5) monobloc comporte une ouverture centrale (11) prévue pour recevoir une fenêtre arrière (11').

3. Structure de cabine suivant la revendication 2, **caractérisée en ce que** l'ouverture (4') est située sous la fenêtre arrière (11').

4. Structure de cabine suivant l'une des revendications précédentes, **caractérisée en ce que** la partie (5') horizontale supérieure couvrante et la partie verticale arrière (5") du toit (5) monobloc creux comportent chacune une série de bouches d'aération (6).

5. Structure de cabine suivant l'une des revendications précédentes, **caractérisée en ce que** le toit (5) monobloc creux et le pare-brise (3) sont encadrés par des profilés latéraux (7) assemblés par vissage.

6. Structure de cabine suivant la revendication 5, **caractérisé en ce que** la paroi avant et la paroi intérieure des profilés (7) comportent des gorges ouvertes (9a, 9b) formant des rails, prévu pour recevoir des inserts de liaison.

7. Structure de cabine suivant la revendication 5, **caractérisé en ce que** les profilés (7) comportent chacun au moins une ouverture longitudinale ménagée sur la paroi avant extérieure.

8. Structure de cabine suivant la revendication 5, **caractérisé en ce que** les profilés (7) comportent chacun au moins une ouverture longitudinale ménagée sur la paroi avant intérieure.

## Claims

1. Cabin structure for a road cleaning vehicle, of the type comprised of a chassis receiving a collection vessel (9), means of cleaning the road (2), a cabin (1) comprising a windscreen (3) covering the entire front part of the vehicle extending from a roof (5) comprising a upper, horizontal covering part (5') and a rear vertical part (5") leaning against the vessel (9) and made from a single piece **characterised in that** a delivery air supply unit is arranged at the rear of the cabin (1) between the rear wall of the compartment and the vessel (9), and **in that** the rear vertical part (5") of the roof (5) presents a hollow structure, the delivery air supply unit (4) being connected to said rear vertical part (5") by an opening to allow the delivery air to be distributed in the cabin.

2. Cabin structure according to claim 1, **characterized in that** the rear vertical part (5") of the single-piece roof (5) comprises a central opening (11) designed to receive a rear window (11').

3. Cabin structure according to claim 2, **characterized in that** the opening (4') is located under the rear window (11').

4. Cabin structure according to one of the previous claims, **characterized in that** the upper, horizontal covering part (5') and the rear vertical part (5") of the hollow single-piece roof (5) each comprise a series of air outlet nozzles.

5. Cabin structure according to one of the previous claims, **characterized in that** the hollow single-piece roof (5) and the windscreen (3) are framed by side sections (7) assembled using screws.

6. Cabin structure according to claim 5, **characterized in that** the front wall and inner wall of the sections (7) comprise open grooves (9a, 9b) forming rails, designed to receive connection inserts.

7. Cabin structure according to claim 5, **characterized in that** the sections (7) each comprise at least one longitudinal opening arranged on the outer front wall.

8. Cabin structure according to claim 5, **characterized in that** the sections (7) each comprise at least one longitudinal opening arranged on the inner front wall.

## Patentansprüche

1. Kabinenstruktur für ein Straßenfahrzeug vom aus einem Fahrzeugrahmen bestehenden Typ, der einen Auffangbehälter(9), Straßenreinigungsmittel (2) und eine an einem Stück ausgeführte Kabine (1) aufnimmt, die eine Windschutzscheibe (3) aufweist, die den gesamten vorderen Bereich des Fahrzeugs abdeckt als Verlängerung eines Dachs (5) mit einem oberen deckenden horizontalen Teil (5') und einem rückwärtigen vertikalen Teil (5"), der auf den Auffangbehälter (9) gestützt ist, **dadurch gekennzeichnet, dass** ein Gebläseluftversorgungsblock (4) an der Rückseite der Kabine (1) zwischen der Rückwand des Fahrraums und dem Behälter (9) angeordnet ist, und dass der rückwärtige vertikale Teil (5") des Dachs (5) eine Hohlstruktur aufweist, wobei der Gebläseluftversorgungsblock (4) mit diesem rückwärtigen vertikalen Teil (5") durch eine Öffnung (4') verbunden ist, die für die Verteilung von Gebläseluft in der Kabine sorgt.

2. Kabinenstruktur nach Anspruch 1, **dadurch gekennzeichnet, dass** der rückwärtige senkrechte Teil (5") des Monoblockdachs (5) eine mittlere Öffnung (11) für die Aufnahme eines Rückfensters (11') aufweist.

3. Kabinenstruktur nach Anspruch 2, **dadurch gekennzeichnet, dass** die Öffnung (4') unter dem Rückfenster (11') angeordnet ist.

4. Kabinenstruktur nach einem der vorausgehenden Ansprüche, **dadurch gekennzeichnet, dass** der abdeckende obere horizontale Teil (5') und der rückwärtige vertikale Teil (5") des hohlen Monoblockdachs (5) jeweils eine Reihe von Lüftungsöffnungen (6) aufweisen.

5. Kabinenstruktur nach einem der vorausgehenden Ansprüche, **dadurch gekennzeichnet, dass** das hohle Monoblockdach (5) und die Windschutzscheibe (3) durch Seitenprofile (7) eingefasst sind, die zusammengeschraubt werden.

6. Kabinenstruktur nach Anspruch 5, **dadurch gekennzeichnet, dass** die Vorderwand und die Innenwand der Profile (7) offene Nuten (9a, 9b) aufweisen, die Schienen bilden, welche für die Aufnahme der Verbindungseinsätze vorgesehen sind.

7. Kabinenstruktur nach Anspruch 5, **dadurch gekennzeichnet, dass** die Profile (7) jeweils mindestens eine Längsöffnung aufweisen, die in der äußeren Vorderwand angeordnet ist.

8. Kabinenstruktur nach Anspruch 5, **dadurch gekennzeichnet, dass** die Profile (7) jeweils mindestens eine Längsöffnung aufweisen, die in der inneren Vorderwand angeordnet ist.
